(19) Europäisches Patentamt / European Patent Office / Office européen des brevets

(11) **EP 4 543 137 A1**

(12) **EUROPEAN PATENT APPLICATION**
published in accordance with Art. 153(4) EPC

(43) Date of publication:
**23.04.2025 Bulletin 2025/17**

(21) Application number: **23824302.6**

(22) Date of filing: **19.06.2023**

(51) International Patent Classification (IPC):
**H04W 76/30** (2018.01)  **H04W 76/14** (2018.01)
**H04W 88/04** (2009.01)  **H04W 92/18** (2009.01)
**H04W 76/34** (2018.01)  **H04W 8/00** (2009.01)
**H04W 24/08** (2009.01)

(52) Cooperative Patent Classification (CPC):
**H04W 8/00; H04W 24/08; H04W 76/14;
H04W 76/30; H04W 76/34; H04W 88/04;
H04W 92/18**

(86) International application number:
**PCT/KR2023/008428**

(87) International publication number:
**WO 2023/244090 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 17.06.2022  KR 20220074418
26.09.2022  US 202263410213 P
27.09.2022  US 202263410603 P
30.10.2022  US 202263420675 P
08.02.2023  KR 20230017031
20.03.2023  KR 20230035985

(71) Applicant: **LG Electronics Inc.**
**Yeongdeungpo-gu**
**Seoul 07336 (KR)**

(72) Inventors:
• **BACK, Seoyoung**
**Seoul 06772 (KR)**
• **LEE, Youngdae**
**Seoul 06772 (KR)**
• **PARK, Giwon**
**Seoul 06772 (KR)**
• **KIM, Laeyoung**
**Seoul 06772 (KR)**
• **LEE, Seungmin**
**Seoul 06772 (KR)**

(74) Representative: **Plasseraud IP**
**104 Rue de Richelieu**
**CS92104**
**75080 Paris Cedex 02 (FR)**

(54) **METHOD FOR OPERATING UE RELATED TO LINK RELEASE OF UE-TO-UE RELAY IN WIRELESS COMMUNICATION SYSTEM**

(57)    According to one embodiment, a method for operating relay user equipment (UE) related to UE-to-UE relay in a wireless communication system comprises: by the relay UE, establishing a first PCS link and a second PC5 link with a first UE and a second UE, respectively; by the relay UE, delivering a message related to establishing an end-to-end PCS link transmitted and received between the first UE and the second UE; by the relay UE, receiving, from the first UE, a predetermined message related to releasing the end-to-end PCS link between the first UE and the second UE; and by the relay UE, releasing the first PCS link and the second PCS link, wherein the predetermined message comprises a value that can be recognized by an Access Stratum (AS) layer of the relay UE.

FIG. 17

S1701 Establish first PCS link and second PC5 with first UE and second UE, respectively

S1702 Transmit message related to establishing of end-to-end PC5 link transmitted and received between first UE and second UE

S1703 Receive predetermined message related to releasing of end-to-end PC5 link between first UE and second UE from first UE

S1704 Release first PC5 link and second PC5 link

## Description

### TECHNICAL FIELD

The following description relates to a wireless communication system, and more particularly, to a method and device for operating a user equipment (UE) related to link release of a UE-to-UE relay.

### BACKGROUND

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

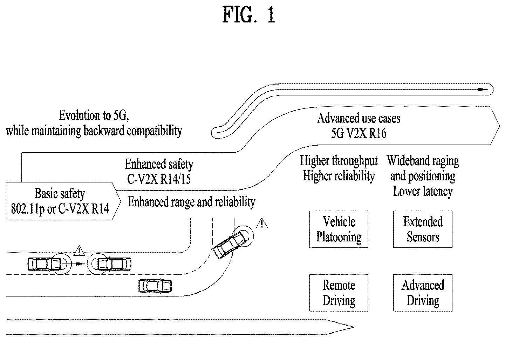

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

## DISCLOSURE

### Technical Problem

The present disclosure is to provide a message for link release and a link release procedure of a user equipment (UE)-to-UE relay.

### Technical Solution

According to an embodiment, an operating method of a relay user equipment (UE) related to a UE-to-UE relay in a wireless communication system includes establishing a first PC5 link and a second PC5 with a first UE and a second UE, respectively, by the relay UE, transmitting a message related to establishing of an end-to-end PC5 link transmitted and received between the first UE and the second UE, by the relay UE, receiving a predetermined message related to releasing of the end-to-end PC5 link between the first UE and the second UE from the first UE, by the relay UE, and releasing the first PC5 link and the second PC5 link, by the relay UE, wherein the predetermined message includes a value recognizable at an access stratum (AS) layer of the relay UE.

According to an embodiment, in a wireless communication system, a relay UE device may include at least one processor, and at least one computer memory operably connected to the at least one processor and storing instructions that, when executed, cause the at least one processor to perform operations, and in this the operations may include establishing a first PC5 link and a second PC5 link with the first UE and the second UE, respectively, transmitting a message related to establishing an end-to-end PC5 link transmitted and received between the first UE and the second UE receiving a predetermined message related to releasing of the end-to-end PC5 link between the first UE and the second UE from the first UE, and releasing the first PC5 link and the second PC5 link by the relay UE, and the predetermined message may include a value recognizable in an access stratum (AS) layer of the relay UE.

The releasing of the first PC5 link and the second PC5 link may be performed after the releasing of the end-to-end PC5 link.

The releasing of the first PC5 link and the second PC5 link may be performed based on a higher layer of the relay UE decoding the predetermined message received from the AS layer.

The predetermined message may be transmitted based on the first UE transmitting a message indicating the releasing of the end-to-end PC5 link.

The releasing of the first PC5 link and the second PC5 link may include releasing of bearer, bearer mapping information, and measurement setting for a UE-to-UE relay.

According to an embodiment, an operating method of a first user equipment (UE) related to a UE-to-UE relay in a wireless communication system includes establishing a first PC5 with the relay UE, by the first UE, transmitting a message related to establishing of an end-to-end PC5 link through the relay UE to the second UE, by the first UE, transmitting a predetermined message related to releasing of the end-to-end PC5 link between the first UE and the second UE from the first UE, by the relay UE, wherein the predetermined message includes a value recognizable at an access stratum (AS) layer of the relay UE, and the first PC5 link is released by a relay UE receiving the predetermined message.

The first PC5 link may be released after releasing of the end-to-end PC5 link.

The predetermined message may be transmitted based on the first UE transmitting a message indicating the releasing of the end-to-end PC5 link.

The releasing of the first PC5 link and the second PC5 link may include releasing of bearer, bearer mapping information, and measurement setting for a UE-to-UE relay.

## Advantageous Effects

According to an embodiment, in the UE-to-UE relay operation, the PC5-S release message transmitted and received for releasing of the end-to-end SL configuration between a source remote UE and a target remote UE may not be recognized by the relay UE, and accordingly, a problem in that the relay UE needs to continue to maintain the PC5 link with each UE may be resolved.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram for explaining comparison between vehicle-to-everything (V2X) communication based on pre-new radio (NR) radio access technology (RAT) and V2X communication based on NR;
FIG. 2 illustrates the structure of a long term evolution (LTE) system according to an embodiment of the present disclosure;
FIG. 3 illustrates radio protocol architectures for user and control planes according to an embodiment of the present disclosure;
FIG. 4 illustrates the structure of a new radio (NR) system according to an embodiment of the present disclosure;
FIG. 5 illustrates a functional division between a next generation radio access network (NG-RAN) and a fifth-generation core (5GC) according to an embodiment of the present disclosure;
FIG. 6 illustrates the structure of a radio frame of NR to which embodiment(s) are applicable;
FIG. 7 illustrates the structure of a slot in an NR frame according to an embodiment of the present disclosure;
FIG. 8 illustrates a radio protocol architecture for sidelink (SL) communication according to an embodiment of the present disclosure;
FIG. 9 illustrates a radio protocol architecture for SL communication according to an embodiment of the present disclosure;
FIG. 10 illustrates a synchronization source or synchronization reference of V2X according to an embodiment of the present disclosure;
FIG. 11 illustrates a procedure for a user equipment (UE) to perform V2X or SL communication depending on transmission modes according to an embodiment of the present disclosure.;
FIG. 12 illustrates a procedure for performing path switching by a UE according to an embodiment of the present disclosure;
FIG. 13 illustrates direct to indirect path switching;
FIGS. 14 and 15 are diagrams to explain UE-to-UE relay selection;
FIG. 16 illustrates a protocol stack of UE-to-UE relay;
FIGS. 17 to 20 are diagrams to explain an embodiment; and
FIGS. 21 to 27 are diagrams to explain various devices to which embodiment(s) are applicable.

## DETAILED DESCRIPTION

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMAfor downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1 GHz, an intermediate frequency band between 1 GHz and 10 GHz, and a high frequency (millimeter) band of 24 GHz or above.

While the following description is given mainly in the context of LTE-A or 5G NR for the clarity of description, the technical idea of an embodiment of the present disclosure is not limited thereto.

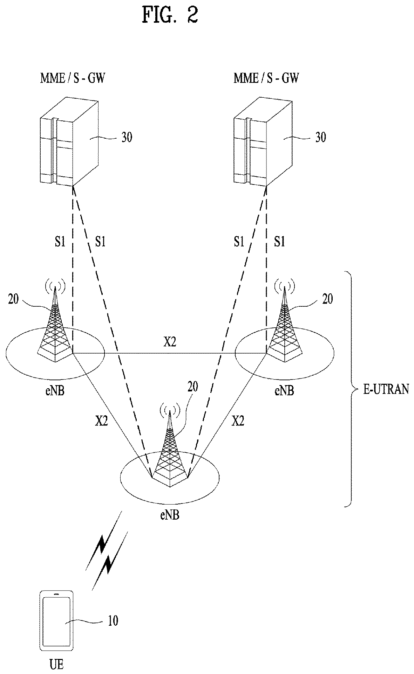

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

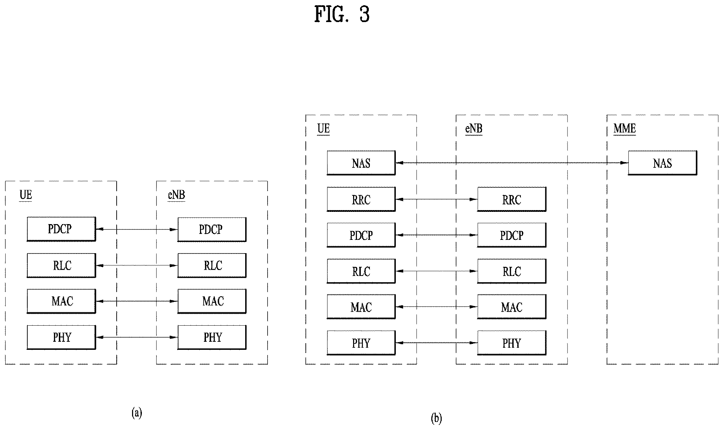

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

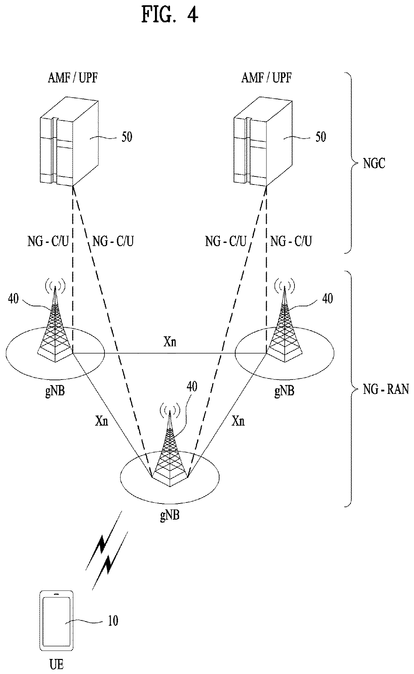

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

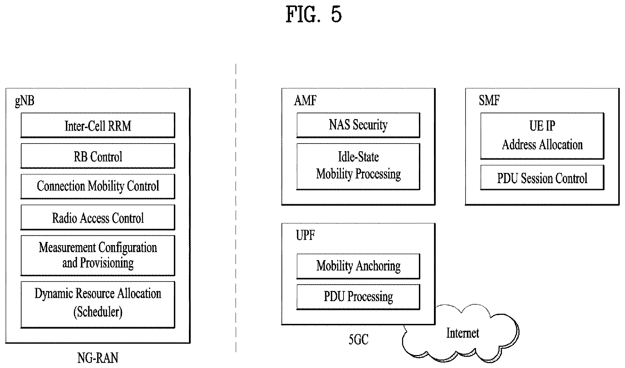

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

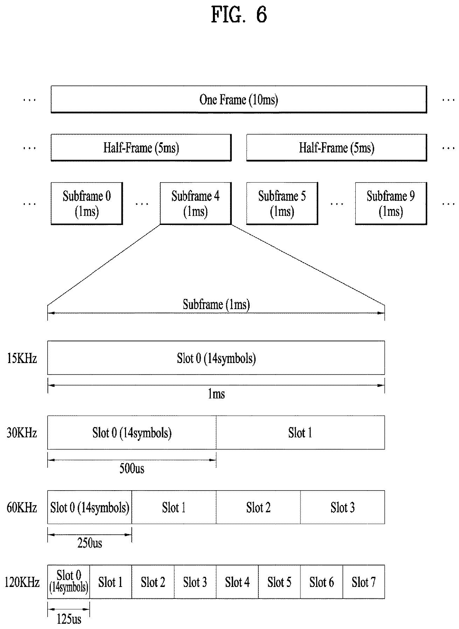

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15 kHz, a wide area in traditional cellular bands may be supported, while with an SCS of 30/60 kHz, a dense urban area, a lower latency, and a wide carrier bandwidth may be supported. With an SCS of 60 kHz or higher, a bandwidth larger than 24.25 GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6 GHz range" and FR2 may be an "above 6 GHz range" called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerals in a frequency range may be changed in the NR system. For example, FR1 may range from 410 MHz to 7125 MHz as listed in [Table 4]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

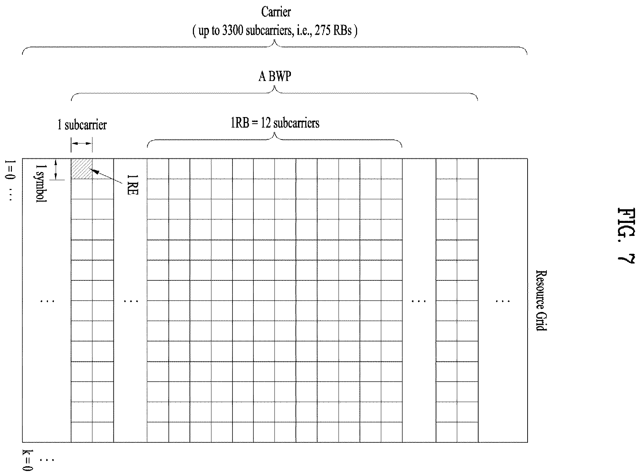

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

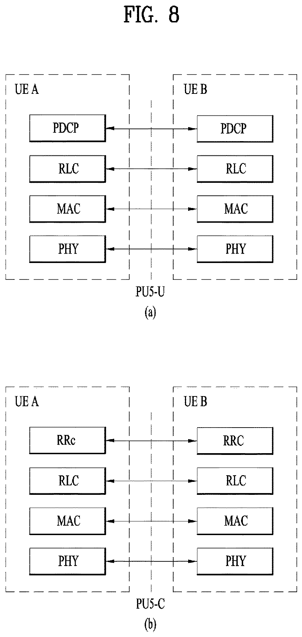

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

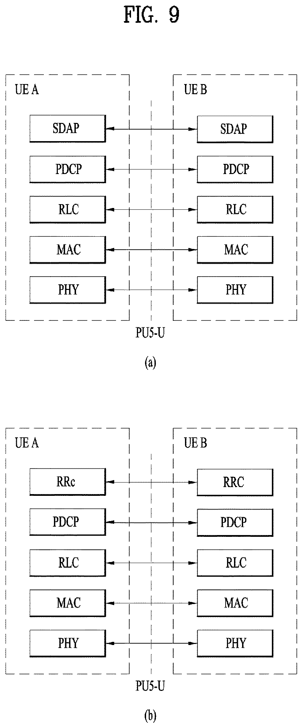

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

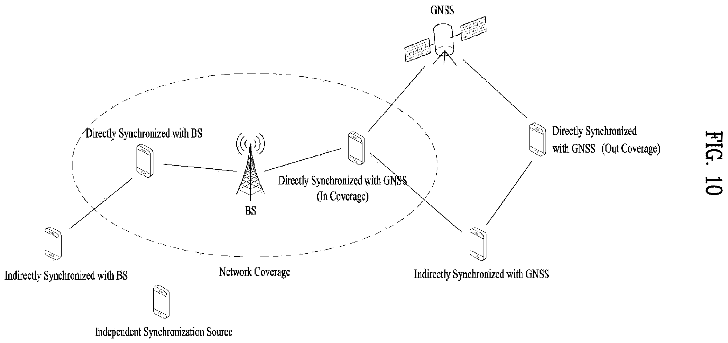

FIG. 10 illustrates a synchronization source or synchronization reference of V2X according to an embodiment of the present disclosure.

Referring to FIG. 10, in V2X, a UE may be directly synchronized with global navigation satellite systems (GNSS). Alternatively, the UE may be indirectly synchronized with the GNSS through another UE (within or out of network coverage). If the GNSS is configured as a synchronization source, the UE may calculate a direct frame number (DFN) and a subframe number based on a coordinated universal time (UTC) and a configured (or preconfigured) DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

SL synchronization sources may be associated with synchronization priority levels. For example, a relationship between synchronization sources and synchronization priorities may be defined as shown in Table 5 or 6. Table 5 or 6 is merely an example, and the relationship between synchronization sources and synchronization priorities may be defined in various ways.

[Table 5]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 6]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with GNSS |
| P3 | BS | GNSS |
| P4 | All UEs directly synchronized with GNSS | All UEs directly synchronized with GNSS |
| P5 | All UEs indirectly synchronized with GNSS | All UEs indirectly synchronized with GNSS |
| P6 | Remaining UE(s) with low priority | Remaining UE(s) with low priority |

In Table 5 or 6, P0 may mean the highest priority, and P6 may mean the lowest priority. In Table 5 or 6, the BS may include at least one of a gNB or an eNB.

Whether to use GNSS-based synchronization or eNB/gNB-based synchronization may be (pre)configured. In a single-carrier operation, the UE may derive a transmission timing thereof from an available synchronization reference having the highest priority.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before transmitting and receiving SL signals. For example, the default information may include information related to an SLSS, a duplex mode (DM), a time division duplex (TDD) UL/DL configuration, information related to a resource pool, an application type related to the SLSS, a subframe offset, broadcast information, etc. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (or preconfigured). Therefore, the UE does not need to perform hypothesis detection on frequency to discover the S-SSB on the carrier.

The NR SL system may support a plurality of numerologies with different SCSs and/or different CP lengths. In this case, as the SCS increases, the length of a time resource used by a transmitting UE to transmit the S-SSB may decrease. Accordingly, the coverage of the S-SSB may be reduced. Therefore, in order to guarantee the coverage of the S-SSB, the transmitting UE may transmit one or more S-SSBs to a receiving UE within one S-SSB transmission period based on the SCS. For example, the number of S-SSBs that the transmitting UE transmits to the receiving UE within one S-SSB transmission period may be pre-configured or configured for the transmitting UE. For example, the S-SSB transmission period may be 160 ms. For example, an S-SSB transmission period of 160 ms may be supported for all SCSs.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

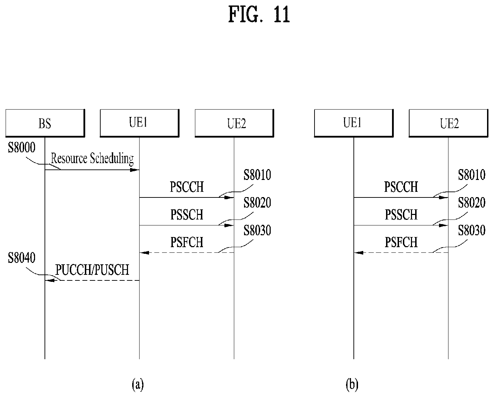

FIG. 11 illustrates a procedure of performing V2X or SL communication by a UE depending on a transmission mode according to an embodiment of the present disclosure. The embodiment of FIG. 11 may be combined with various embodiemnts of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 11(a) illustrates a UE operation related to LTE transmission mode 1 or LTE transmission mode 3. Alternatively, for example, FIG. 11(a) illustrates a UE operation related to NR resource allocation mode 1. For example, LTE transmission mode 1 may apply to general SL communication, and LTE transmission mode 3 may apply to V2X communication.

For example, FIG. 11(b) illustrates a UE operation related to LTE transmission mode 2 or LTE transmission mode 4. Alternatively, for example, FIG. 11(b) illustrates a UE operation related to NR resource allocation mode 2.

Referring to FIG. 11 (a), in LTE transmission mode 1, LTE transmission mode 3, or NR resource allocation mode 1, a BS may schedule an SL resource to be used for SL transmission by a UE. For example, in step S8000, the BS may transmit information related to an SL resource and/or information related to a UE resource to a first UE. For example, the UL resource may include a PUCCH resource and/or a PUSCH resource. For example, the UL resource may be a resource to report SL HARQ feedback to the BS.

For example, the first UE may receive information related to a Dynamic Grant (DG) resource and/or information related to a Configured Grant (CG) resource from the BS. For example, the CG resource may include a CG type 1 resource or a CG type 2 resource. In the present specification, the DG resource may be a resource configured/allocated by the BS to the first UE in Downlink Control Information (DCI). In the present specification, the CG resource may be a (periodic) resource configured/allocated by the BS to the first UE in DCI and/or an RRC message. For example, for the CG type 1 resource, the BS may transmit an RRC message including information related to the CG resource to the first UE. For example, for the CG type 2 resource, the BS may transmit an RRC message including information related to the CG resource to the first UE, and the BS may transmit DCI for activation or release of the CG resource to the first UE.

In step S8010, the first UE may transmit a PSCCH (e.g., Sidelink Control Information (SCI) or 1st-stage SCI) to a second UE based on the resource scheduling. In step S8020, the first UE may transmit a PSSCH (e.g., 2nd-stage SCI, MAC PDU, data, etc.) related to the PSCCH to the second UE. In step S8030, the first UE may receive a PSFCH related to the PSCCH/PSSCH from the second UE. For example, HARQ feedback information (e.g., NACK information or ACK information) may be received from the second UE over the PSFCH. In step S8040, the first UE may transmit/report HARQ feedback information to the BS over a PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1. Table 7 shows one example of DCI for scheduling of SL.

[Table 7]

7.3.1.4.1 Format 3_0

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index $\lceil \log_2 I \rceil$ bits, where $I$ is the number of resource pools for transmission configured by the higher layer parameter *sl-TxPoolScheduling.*

- Time gap - 3 bits determined by higher layer parameter *sl-DCI-ToSL-Trans,* as defined in clause 8.1.2.1 of [6, TS 38.214]

- HARQ process number - 4 bits.

- New data indicator - 1 bit.

- Lowest index of the subchannel allocation to the initial transmission $\lceil \log_2(N^{\mathrm{SL}}_{\mathrm{subChannel}}) \rceil$ bits as defined in clause 8.1.2.2 of [6, TS 38.214]

- SCI format 1-A fields according to clause 8.3.1.1:

- Frequency resource assignment.

- Time resource assignment.

- PSFCH-to-HARQ feedback timing indicator $\lceil \log_2 N_{\mathrm{fb\_timing}} \rceil$ bits, where $N_{\mathrm{fb\_timing}}$ is the number of entries in the higher layer parameter *sl-PSFCH-ToPUCCH,* as defined in clause 16.5 of [5, TS 38.213]

- PUCCH resource indicator - 3 bits as defined in clause 16.5 of [5, TS 38.213].

- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.

- Counter sidelink assignment index - 2 bits

- 2 bits as defined in clause 16.5.2 of [5, TS 38.213] if the UE is configured with *pdsch-HARQ-ACK-Codebook = dynamic*

- 2 bits as defined in clause 16.5.1 of [5, TS 38.213] if the UE is configured with *pdsch-HARQ-ACK-Codebook = semi-static*

- Padding bits, if required

If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

7.3.1.4.2 Format 3_1

DCI format 3_1 is used for scheduling of LTE PSCCH and LTE PSSCH in one cell.

(continued)

The following information is transmitted by means of the DCI format 3_1 with CRC scrambled by SL Semi-Persistent Scheduling V-RNTI:

- Timing offset - 3 bits determined by higher layer parameter *sl-TimeOffsetEUTRA-List,* as defined in clause 16.6 of [5, TS 38.213]

- Carrier indicator -3 bits as defined in 5.3.3.1.9A of [11, TS 36.212].

- Lowest index of the subchannel allocation to the initial transmission - $-\left\lceil \log_2(N_{\text{subchannel}}^{\text{SL}}) \right\rceil$ bits as defined in 5.3.3.1.9A of [11, TS 36.212].

- Frequency resource location of initial transmission and retransmission, as defined in 5.3.3.1.9A of [11, TS 36.212]

- Time gap between initial transmission and retransmission, as defined in 5.3.3.1.9A of [11, TS 36.212]

- SL index - 2 bits as defined in 5.3.3.1.9A of [11, TS 36.212]

- SL SPS configuration index - 3 bits as defined in clause 5.3.3.1.9A of [11, TS 36.212].

- Activation/release indication - 1 bit as defined in clause 5.3.3.1.9A of [11, TS 36.212].

Referring to FIG. 11 (b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in the step S8010, the first UE having self-selected a resource in the resource pool may transmit PSCCH (e.g., Side Link Control Information (SCI) or 1st-stage SCI) to the second UE using the resource. In the step S8020, the first UE may transmit PSSCH (e.g., 2nd-stage SCI, MAC PDU, data, etc.) related to the PSCCH to the second UE. In the step S8030, the first UE may receive PSFCH related to the PSCCH/PSSCH from the second UE.

Referring to FIG. 11 (a) or FIG. 11 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B. Table 8 shows one example of a 1st-stage SCI format.

[Table 8]

8.3.1.1 SCI format 1-A

SCI format 1-A is used for the scheduling of PSSCH and 2nd-stage-SCI on PSSCH The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment $\left\lceil \log_2(\frac{N_{\text{subChannel}}^{\text{SL}}\left(N_{\text{subChannel}}^{\text{SL}} + 1\right)}{2}) \right\rceil$ bits when the value of the higher layer parameter *sl-MaxNumPerReserve* is configured to 2; otherwise

$\left\lceil \log_2(\frac{N_{\text{subChannel}}^{\text{SL}}\left(N_{\text{subChannel}}^{\text{SL}} + 1\right)\left(2N_{\text{subChannel}}^{\text{SL}} + 1\right)}{6}) \right\rceil$ bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

(continued)

- Resource reservation period $-\lceil \log_2 N_{\mathrm{rsv\_period}} \rceil$ bits as defined in clause 16.4 of [5, TS 38.213], where $N_{\mathrm{rsv\_period}}$ is the number of entries in the higher layer parameter *sl-ResourceReservePeriodList,* if higher layer parameter *sl-MultiReserveResource* is configured; 0 bit otherwise.

- DMRS pattern $-\lceil \log_2 N_{\mathrm{pattern}} \rceil$ bits as defined in clause 8.4.1.1.2 of [4, TS 38.211], where $N_{\mathrm{pattern}}$ is the number of DMRS patterns configured by higher layer parameter *sl-PSSCH-DMRS-TimePatternList.*

- 2nd-stage SCI format - 2 bits as defined in Table 8.3.1.1-1.

- Beta_offset indicator - 2 bits as provided by higher layer parameter *sl-BetaOffsets2ndSCI* and Table 8.3.1.1-2.

- Number of DMRS port - 1 bit as defined in Table 8.3.1.1-3.

- Modulation and coding scheme - 5 bits as defined in clause 8.1.3 of [6, TS 38.214].

- Additional MCS table indicator - as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl-Additional-MCS-Table*; 0 bit otherwise.

- PSFCH overhead indication - 1 bit as defined clause 8.1.3.2 of [6, TS 38.214] if higher layer parameter *sl-PSFCH-Period* = 2 or 4; 0 bit otherwise.

- Reserved - a number of bits as determined by higher layer parameter *sl-NumReservedBits,* with value set to zero.

Table 9 shows exemplary 2nd-stage SCI formats.

[Table 9]

8.4 Sidelink control information on PSSCH

SCI carried on PSSCH is a 2nd-stage SCI, which transports sidelink scheduling information.

8.4.1 2nd-stage SCI formats

The fields defined in each of the 2nd-stage SCI formats below are mapped to the information bits $a_0$ to $a_{A-1}$ as follows:

Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$.

8.4.1.1 SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits.

- New data indicator - 1 bit.

- Redundancy version - 2 bits as defined in Table 7.3.1.1.1-2.

- Source ID - 8 bits as defined in clause 8.1 of [6, TS 38.214].

- Destination ID - 16 bits as defined in clause 8.1 of [6, TS 38.214].

- HARQ feedback enabled/disabled indicator - 1 bit as defined in clause 16.3 of [5, TS 38.213].

- Cast type indicator - 2 bits as defined in Table 8.4.1.1-1 and in clause 8.1 of [6, TS 38.214].

- CSI request - 1 bit as defined in clause 8.2.1 of [6, TS 38.214] and in clause 8.1 of [6, TS 38.214].

Referring to FIG. 11(a) or FIG. 11(b), in step S8030, a first UE may receive a PSFCH based on Table 10. For example, the first UE and a second UE may determine a PSFCH resource based on Table 10, and the second UE may transmit HARQ feedback to the first UE on the PSFCH resource.

[Table 10]

16.3 UE procedure for reporting HARQ-ACK on sidelink

A UE can be indicated by an SCI format scheduling a PSSCH reception to transmit a PSFCH with HARQ-ACK information in response to the PSSCH reception. The UE provides HARQ-ACK information that includes ACK or NACK, or only NACK.

A UE can be provided, by *sl-PSFCH-Period,* a number of slots in a resource pool for a period of PSFCH transmission occasion resources. If the number is zero, PSFCH transmissions from the UE in the resource pool are disabled.

A UE expects that a slot $t'^{SL}_{k}$ ($0 \leq k < T'_{max}$) has a PSFCH transmission occasion resource if

$$k \bmod N^{\text{PSFCH}}_{\text{PSSCH}} = 0$$ , where $t'^{SL}_{k}$ is defined in [6, TS 38.214], and $T'_{max}$ is a number of slots that belong to the resource pool within 10240 msec according to [6, TS 38.214], and $N^{\text{PSFCH}}_{\text{PSSCH}}$ is provided by *sl-PSFCH-Period.*

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH,* of the resource pool after a last slot of the PSSCH reception.

A UE is provided by *sl-PSFCH-RB-Set* a set of $M^{\text{PSFCH}}_{\text{PRB, set}}$ PRBs in a resource pool for PSFCH transmission in a PRB of the resource pool. For a number of $N_{\text{subch}}$ sub-channels for the resource pool, provided by *sl-NumSubchannel,* and a number of PSSCH slots associated with a PSFCH slot that is less than or equal to $N^{\text{PSFCH}}_{\text{PSSCH}}$ , the UE allocates the $$\left[\left(i + j \cdot N^{\text{PSFCH}}_{\text{PSSCH}}\right) \cdot M^{\text{PSFCH}}_{\text{subch, slot}}, \left(i + 1 + j \cdot N^{\text{PSFCH}}_{\text{PSSCH}}\right) \cdot M^{\text{PSFCH}}_{\text{subch, slot}} - 1\right]$$ PRBs from the $M^{\text{PSFCH}}_{\text{PRB, set}}$ PRBs to slot *i* among the PSSCH slots associated with the PSFCH slot and sub-channel *j,* where $$M^{\text{PSFCH}}_{\text{subch, slot}} = M^{\text{PSFCH}}_{\text{PRB, set}} / \left(N_{\text{subch}} \cdot N^{\text{PSFCH}}_{\text{PSSCH}}\right), \ 0 \leq i < N^{\text{PSFCH}}_{\text{PSSCH}}, \ 0 \leq j < N_{\text{subch}}$$ , and the allocation starts in an ascending order of *i* and continues in an ascending order of *j.* The UE expects that $M^{\text{PSFCH}}_{\text{PRB, set}}$ is a multiple of $N_{\text{subch}} \cdot N^{\text{PSFCH}}_{\text{PSSCH}}$ .

The second OFDM symbol *l'* of PSFCH transmission in a slot is defined as *l' = sl-StartSymbol + sl-LengthSymbols - 2 .*

A UE determines a number of PSFCH resources available for multiplexing HARQ-ACK information in a PSFCH transmission as $$R^{\text{PSFCH}}_{\text{PRB, CS}} = N^{\text{PSFCH}}_{\text{type}} \cdot M^{\text{PSFCH}}_{\text{subch, slot}} \cdot N^{\text{PSFCH}}_{\text{CS}}$$ where $N^{\text{PSFCH}}_{\text{CS}}$ is a number of cyclic shift pairs for the resource pool provided by *sl-NumMuxCS-Pair* and, based on an indication by *sl-PSFCH-CandidateResourceType,*

- if *sl-PSFCH-CandidateResourceType* is configured as *startSubCH,* $N^{\text{PSFCH}}_{\text{type}} = 1$ and the $M^{\text{PSFCH}}_{\text{subch, slot}}$ PRBs are associated with the starting sub-channel of the corresponding PSSCH;

- if *sl-PSFCH-CandidateResourceType* is configured as *allocSubCH,* $N^{\text{PSFCH}}_{\text{type}} = N^{\text{PSSCH}}_{\text{subch}}$ and the $N^{\text{PSSCH}}_{\text{subch}} \cdot M^{\text{PSFCH}}_{\text{subch, slot}}$ PRBs are associated with the $N^{\text{PSSCH}}_{\text{subch}}$ sub-channels of the corresponding PSSCH.

The PSFCH resources are first indexed according to an ascending order of the PRB index, from the $N^{\text{PSFCH}}_{\text{type}} \cdot M^{\text{PSFCH}}_{\text{subch, slot}}$ PRBs, and then according to an ascending order of the cyclic shift pair index from the $N^{\text{PSFCH}}_{\text{CS}}$ cyclic shift pairs.

(continued)

A UE determines an index of a PSFCH resource for a PSFCH transmission in response to a PSSCH reception as $(P_{\mathrm{ID}} + M_{\mathrm{ID}}) mod R_{\mathrm{PRB, CS}}^{\mathrm{PSFCH}}$ where $P_{\mathrm{ID}}$ is a physical layer source ID provided by SCI format 2-A or 2-B [5, TS 38.212] scheduling the PSSCH reception, and $M_{\mathrm{ID}}$ is the identity of the UE receiving the PSSCH as indicated by higher layers if the UE detects a SCI format 2-A with Cast type indicator field value of "01"; otherwise, $M_{\mathrm{ID}}$ is zero. A UE determines a $m_0$ value, for computing a value of cyclic shift $\alpha$ [4, TS 38.211], from a cyclic shift pair index corresponding to a PSFCH resource index and from $N_{\mathrm{CS}}^{\mathrm{PSFCH}}$ using Table 16.3-1.

Referring to FIG. 11(a), in step S8040, the first UE may transmit SL HARQ feedback to the BS over a PUCCH and/or PUSCH based on Table 11.

[Table 11]

16.5 UE procedure for reporting HARQ-ACK on uplink

A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0.

For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources.

For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.

From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable

- for one or more PSFCH reception occasions associated with SCI format 2-A with Cast type indicator field value of "10"

- generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK

- for one or more PSFCH reception occasions associated with SCI format 2-A with Cast type indicator field value of "01"

- generate ACK if the UE determines ACK from at least one PSFCH reception occasion, from the number of PSFCH reception occasions corresponding to PSSCH transmissions, in PSFCH resources corresponding to every identity $M_{\mathrm{ID}}$ of the UEs that the UE expects to receive the PSSCH, as described in clause 16.3; otherwise, generate NACK

- for one or more PSFCH reception occasions associated with SCI format 2-B or SCI format 2-A with Cast type indicator field value of "11"

- generate ACK when the UE determines absence of PSFCH reception for the last PSFCH reception occasion from the number of PSFCH reception occasions corresponding to PSSCH transmissions; otherwise, generate NACK

After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.

The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission.

(continued)

| |
|---|
| The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization. |
| The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant. |

Table 12 below shows details of selection and reselection of an SL relay UE defined in 3GPP TS 36.331. The contents of Table 12 are used as the prior art of the present disclosure, and related necessary details may be found in 3GPP TS 36.331.

[Table 12]

| |
|---|
| 5.10.11.4 Selection and reselection of sidelink relay UE |
| A UE capable of sidelink remote UE operation that is configured by upper layers to search for a sidelink relay UE shall: |
| if out of coverage on the frequency used for sidelink communication, as defined in TS 36.304 [4], clause 11.4; or if the serving frequency is used for sidelink communication and the RSRP measurement of the cell on which the UE camps (RRC_IDLE)/ the PCell (RRC_CONNECTED) is below *threshHigh* within *remoteUE-Config* : |
| 2> search for candidate sidelink relay UEs, in accordance with TS 36.133 [16] |
| 2> when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the preconfigured *filterCoefficient* as defined in 9.3(out of coverage), before using the SD-RSRP measurement results; |
| NOTE 1: The details of the interaction with upper layers are up to UE implementation. |
| 2> if the UE does not have a selected sidelink relay UE: |
| 3> select a candidate sidelink relay UE which SD-RSRP exceeds *q-RxLevMin* included in either *reselectionInfoIC* (in coverage) or *reselectionInfoOoC* (out of coverage) by *minHyst*; |
| 2> else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection): |
| 3> select a candidate sidelink relay UE which SD-RSRP exceeds *q-RxLevMin* included in either *reselectionInfoIC* (in coverage) or *reselectionInfoOoC* (out of coverage) by *minHyst*; |
| 2> else if the UE did not detect any candidate sidelink relay UE which SD-RSRP exceeds *q-RxLevMin* included in either *reselectionInfoIC* (in coverage) or *reselectionInfoOoC* (out of coverage) by *minHyst:* |
| 3> consider no sidelink relay UE to be selected; |
| NOTE 2: The UE may perform sidelink relay UE reselection in a manner resulting in selection of the sidelink relay UE, amongst all candidate sidelink relay UEs meeting higher layer criteria, that has the best radio link quality. Further details, including interaction with upper layers, are up to UE implementation. |
| 5.10.11.5 Sidelink remote UE threshold conditions |
| A UE capable of sidelink remote UE operation shall: |
| 1> if the threshold conditions specified in this clause were not met: |
| 2> if *threshHigh* is not included in *remoteUE-Config* within *SystemInformationBlockType19*; or |
| 2> if *threshHigh* is included in *remoteUE-Config* within *SystemInformationBlockType19*; and the RSRP measurement of the PCell, or the cell on which the UE camps, is below *threshHigh* by *hystMax* (also included within *remoteUE-Config*): |
| 3> consider the threshold conditions to be met (entry); |
| else: |
| 2> if *threshHigh* is included in *remoteUE-Config* within *SystemInformationBlockType19*; and the RSRP measurement of the PCell, or the cell on which the UE camps, is above *threshHigh* (also included within *remoteUE-Config*): |
| 3> consider the threshold conditions not to be met (leave); |

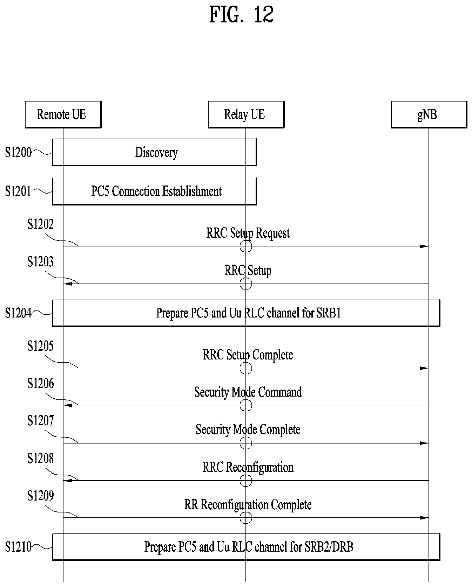

FIG. 12 shows connection management captured in the TR document (3GPP TR 38.836) related to Rel-17 NR SL and a procedure for path switching from direct to indirect. A remote UE needs to establish its own PDU session/DRB with a network before user plane data transmission.

A PC5 unicast link establishment procedure in terms of PC5-RRC of Rel-16 NR V2X may be reused to establish a secure unicast link for L2 UE-to-network relaying between the remote UE and a relay UE before the remote UE establishes a Uu RRC connection with the network through the relay UE.

For both in-coverage and out-of-coverage, when the remote UE initiates a first RRC message for connection establishment with a gNB, a PC5 L2 configuration for transmission between the remote UE and the UE-to-network relay UE may be based on an RLC/MAC configuration defined in the standard. Establishment of Uu SRB1/SRB2 and DRB of the remote UE complies with a legacy Uu configuration procedure for L2 UE-to-network relay.

A high-level connection establishment procedure shown in FIG. 12 is applied to the L2 UE-to-network relay.

In operation S1200, the remote and relay UEs may perform a discovery procedure and establish a PC5-RRC connection in operation S1201 based on the existing Rel-16 procedure.

In operation S1202, the remote UE may transmit a first RRC message (i.e., RRCSetupRequest) for connection establishment with the gNB through the relay UE by using a default L2 configuration of PC5. The gNB responds to the remote UE with an RRCSetup message (S1203). Transmission of RRCSetup to the remote UE uses a default configuration of PC5. When the relay UE does not start in RRC_CONNECTED, the relay UE needs to perform its own connection setup upon receiving a message about the default L2 configuration of PC5. In this operation, details for the relay UE to transmit the RRCSetupRequest/RRCSetup message to the remote UE may be discussed in stage WI.

In operation S1204, the gNB and the relay UE perform a relay channel setup procedure via Uu. According to the configuration of the gNB, the relay/remote UE establishes an RLC channel for relaying SRB1 with the remote UE via PC5. In this operation, a relay channel for SRB1 is prepared.

In operation S1205, the remote UE SRB1 message (e.g., RRCSetupComplete message) is transmitted to the gNB via the relay UE by using the SRB 1 relay channel via PC5. The remote UE performs RRC connection via Uu.

In operation S 1206, the remote UE and the gNB configure security according to a legacy procedure, and a security message is transmitted through the relay UE.

In operation S1210, the gNB configures an additional RLC channel between the gNB and the relay UE for traffic relay. According to the configuration of the gNB, the relay/remote UE configures an RLC channel between the remote UE and the relay UE for traffic relay. The gNB transmits RRCReconfiguration to the remote UE through the relay UE to configure relay SRB2/DRB. The remote UE transmits RRCReconfigurationComplete in response to the gNB through the relay UE.

For L2 UE-to-network relay in addition to connection establishment procedure:

- The RRC reconfiguration and RRC disconnection procedures may reuse legacy RRC procedures with the message content/configuration design left to stage WI.
- RRC connection reconfiguration and RRC connection resumption procedures may reuse the existing RRC procedure as a baseline by considering the connection establishment procedure of the above L2 UE-to-network relay to handle a relay-specific part along with message content/configuration design. The message content/configuration may be defined later.

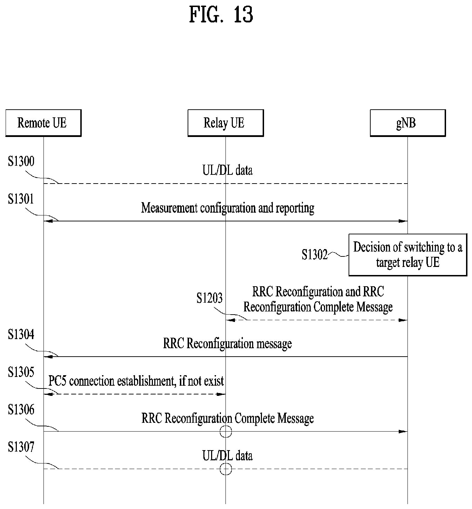

FIG. 13 illustrates direct to indirect path switching. For service continuity of L2 UE-to-network relay, the procedure in FIG. 13 may be used when a remote UE switches to an indirect relay UE.

Referring to FIG. 13, in operation S1301, the remote UE measures/discovers a candidate relay UE and then reports one or several candidate relay UEs. The remote UE may filter out an appropriate relay UE that meets higher layer standard during reporting. The report may include the ID and SL RSRP information of the relay UE, and in this case, the PC5 measurement details may be determined later.

In operation S1302, the gNB determines to switch to a target relay UE and the target (re)configuration is optionally transmitted to the relay UE.

In operation S1304, the RRC reconfiguration message for the remote UE may include the ID of the target relay UE, target Uu, and PC5 configuration.

In operation S1305, the remote UE establishes a PC5 connection with the target relay UE when the connection is not established.

In operation S1306, the remote UE feeds back RRCReconfigurationComplete to the gNB via a target path by using the target configuration provided in RRCReconfiguration.

In operation S1307, a data path is switched.

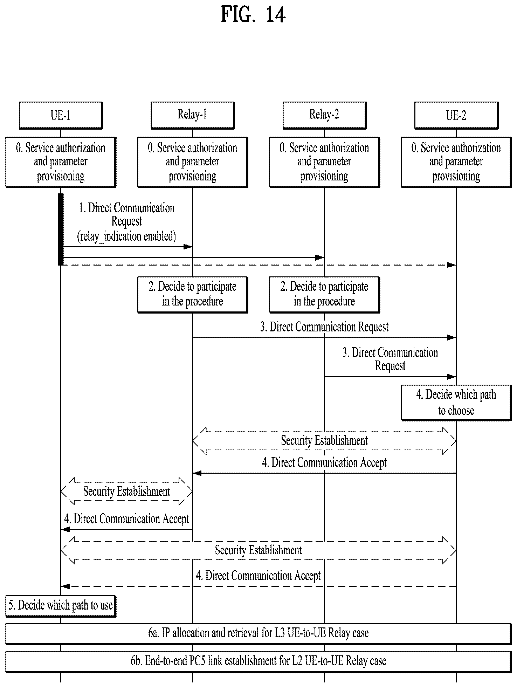

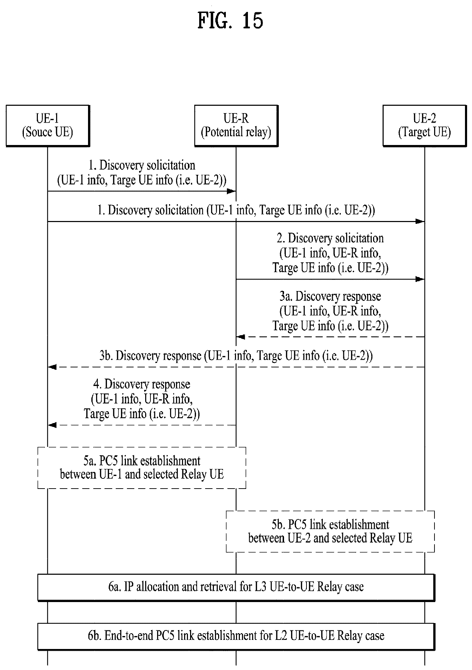

Tables 13 to 16 show 3GPP technical reports related to UE-to-UE Relay Selection and are used as the related art in the present disclosure. FIG. 14 in Table 14 and FIG. 15 in Table 16 correspond to FIGS. 14 and 15, respectively.

[Table 13]

6.8 Solution #8: UE-to-UE Relay Selection Without Relay Discovery

6.8.1 Description

When a source UE wants to communicate with a target UE, it will first try to find the target UE by either sending a Direct Communication Request or a Solicitation message with the target UE info. If the source UE cannot reach the target UE directly, it will try to discover a UE-to-UE relay to reach the target UE which may also trigger the relay to discover the target UE. To be more efficient, this solution tries to integrate target UE discovery and UE-to-UE relay discovery and selection together, including two alternatives:

- Alternative 1: UE-to-UE relay discovery and selection can be integrated into the unicast link establishment procedure as described in clause 6.3.3 of TS 23.287 [5].

- Alternative 2: UE-to-UE relay discovery and selection is integrated into Model B direct discovery procedure.

A new field is proposed to be added in the Direct Communication Request or the Solicitation message to indicate whether relays can be used in the communication. The field can be called relay_indication. When a UE wants to broadcast a Direct Communication Request or a Solicitation message, it indicates in the message whether a UE-to-UE relay could be used. For Release 17, it is assumed that the value of the indication is restricted to single hop.

When a UE-to-UE relay receives a Direct Communication Request or a Solicitation message with the relay_indication set, then it shall decide whether to forward the message (i.e. modify the message and broadcast it in its proximity), according to e.g. Relay Service Code if there is any, Application ID, authorization policy (e.g. relay for specific ProSe Service), the current traffic load of the relay, the radio conditions between the source UE and the relay UE, etc.

It may exist a situation where multiple UE-to-UE relays can be used to reach the target UE or the target UE may also directly receive the Direct Communication Request or Solicitation message from the source UE. The target UE may choose which one to reply according to e.g. signal strength, local policy (e.g. traffic load of the UE-to-UE relays), Relay Service Code if there is any or operator policies (e.g. always prefer direct communication or only use some specific UE-to-UE relays).

The source UE may receive the responses from multiple UE-to-UE relays and may also from the target UE directly, the source UE chooses the communication path according to e.g. signal strength or operator policies (e.g. always prefer direct communication or only use some specific UE-to-UE relays).

[Table 14]

6.8.2 Procedures

6.8.2.1 UE-to-UE relay discovery and selection is integrated into the unicast link establishment procedure (Alternative 1)

Fig 14 illustrates the procedure of the proposed method.

0. UEs are authorized to use the service provided by the UE-to-UE relays.

UE-to-UE relays are authorized to provide service of relaying traffic among UEs. The authorization and the parameter provisioning can use solutions for KI#8, e.g. Sol#36. The authorization can be done when UEs/relays are registered to the network. Security related

parameters may be provisioned so that a UE and a relay can verify the authorization with each other if needed.

1. UE-1 wants to establish unicast communication with UE-2 and the communication can be either through direct link with UE-2 or via a UE-to-UE relay. Then UE-1 broadcasts Direct Communication Request with relay_indication enabled. The message will be received by relay-1, relay-2. The message may also be received by UE-2 if it is in the proximity of UE-1. UE-1 includes source UE info, target UE info, Application ID, as well as Relay Service Code if there is any. If UE-1 does not want relay to be involved in the communication, then it will made relay_indication disabled.

NOTE 1: The data type of relay_indication can be determined in Stage 3.

Details of Direct Communication Request/Accept messages will be determined in stage 3.

2. Relay-1 and relay-2 decide to participate in the procedure. They broadcast a new Direct Communication Request message in their proximity without relay_indication enabled. If a relay receives this message, it will just drop it. When a relay broadcasts the Direct Communication Request message, it includes source UE info, target UE info and Relay UE info (e.g. Relay UE ID) in the message and use Relay's L2 address as the source Layer-2 ID. The Relay maintains association between the source UE information (e.g. source UE L2 ID) and the new Direct Communication Request.

3. UE-2 receives the Direct Communication Requests from relay-1 and relay-2. UE-2 may also receive Direct Communication Request message directly from the UE-1 if the UE-2 is in the communication range of UE-1.

(continued)

| 4. UE-2 chooses relay-1 and replies with Direct Communication Accept message. If UE-2 directly receives the Direct Communication Request from UE-1, it may choose to setup a direct communication link by sending the Direct Communication Accept message directly to UE-1. After receiving Direct Communication Accept, a UE-to-UE relay retrieves the source UE information stored in step 2 and sends the Direct Communication Accept message to the source UE with its Relay UE info added in the message. |
| --- |

[Table 15]

| After step 4, UE-1 and UE-2 have respectively setup the PC5 links with the chosen UE-to-UE relay. |
| --- |
| NOTE 2: The security establishment between the UE1 and Relay-1, and between Relay-1 and UE-2 are performed before the Relay-1 and UE-2 send Direct |
| Communication Accept message. Details of the authentication/ security establishment procedure are determined by SA WG3. The security establishment procedure can be skipped if there already exists a PC5 link between the source (or target) UE and the relay which can be used for relaying the traffic. |
| 5. UE-1 receives the Direct Communication Accept message from relay-1. UE-1 chooses path according to e.g. policies (e.g. always choose direct path if it is possible), signal strength, etc. If UE-1 receives Direct Communication Accept / Response message request accept directly from UE-2, it may choose to setup a direct PC5 L2 link with UE-2 as described in clause 6.3.3 of TS 23.287 [5], then step 6 is skipped. |
| 6a. For the L3 UE-to-UE Relay case, UE-1 and UE-2 finish setting up the communication link via the chosen UE-to-UE relay. The link setup information may vary depending on the type of relay, e.g. L2 or L3 relaying. Then UE-1 and UE-2 can communicate via the relay. Regarding IP address allocation for the source/remote UE, the addresses can be either assigned by the relay or by the UE itself (e.g. link-local IP address) as defined in clause 6.3.3 of TS 23.287 [5]. |
| 6b. For the Layer 2 UE-to-UE Relay case, the source and target UE can setup an end-to-end PC5 link via the relay. UE-1 sends a unicast E2E Direct Communication Request message to UE-2 via the Relay-1, and UE-2 responds with a unicast E2E Direct Communication Accept message to UE-1 via the Relay-1. Relay-1 transfers the messages based on the identity information of UE-1/UE-2 in the Adaptation Layer. |
| NOTE 3: How Relay-1 can transfer the messages based on the identity information of UE-1/UE-2 in the Adaptation Layer requires cooperation with RAN2 during the normative phase. |
| NOTE 4: In order to make a relay or path selection, the source UE can setup a timer after sending out the Direct Communication Request for collecting the corresponding response messages before making a decision. Similarly, the target UE can also setup a timer after receiving the first copy of the Direct Communication Request / message for collecting multiple copies of the message from different paths before making a decision. |
| NOTE 5: In the first time when a UE receives a message from a UE-to-UE relay, the UE needs to verify if the relay is authorized be a UE-to-UE relay. Similarly, the UE-to-UE relay may also need to verify if the UE is authorized to use the relay service. The verification details and the how to secure the communication between two UEs through a UE-to-UE relay is to be defined by SA WG3. |

[Table 16]

| 6.8.2.2 UE-to-UE relay discovery and selection is integrated into Model B direct discovery procedure (Alternative 2) Depicted in Fig 15 is the procedure for UE-UE Relay discovery Model B, and the discovery/selection procedure is separated from hop by hop and end-to-end link establishment. |
| --- |
| 1. UE-1 broadcasts discovery solicitation message carrying UE-1 info, target UE info (UE-2), Application ID, Relay Service Code if any, the UE-1 can also indicate relay_indication enabled. |
| 2. On reception of discovery solicitation, the candidate Relay UE-R broadcasts discovery solicitation carrying UE-1 info, UE-R info, Target UE info. The Relay UE-R uses Relay's L2 address as the source Layer-2 ID. |
| 3. The target UE-2 responds the discovery message. If the UE-2 receives discovery solicitation message in step 1, then UE-2 responds discovery response in step 3b with UE-1 info, UE-2 info. If not and UE-2 receives discovery solicitation in step 2, then UE-2 responds discovery response message in step 3a with UE-1 info, UE-R info, UE-2 info. |
| 4. On reception of discovery response in step 3a, UE-R sends discovery response with UE-1 info, UE-R info, UE-2 info. If more than one candidate Relay UEs responding discovery response message, UE-1 can select one Relay UE based on e.g. implementation or link qualification. |

(continued)

5. The source and target UE may need to setup PC5 links with the relay before communicating with each other. Step 5a can be skipped if there already exists a PC5 link between the UE-1 and UE-R which can be used for relaying. Step 5b can be skipped if there already exists a PC5 link between the UE-2 and UE-R which can be used for relaying.

6a. Same as step 6a described in clause 6.8.2.1.

6b. For the Layer-2 UE-to-UE Relay, the E2E unicast Direct Communication Request message is sent from UE1 to the selected Relay via the per-hop link (established in steps 5a) and the Adaptation layer info identifying the peer UE (UE3) as the destination. The UE-to-UE Relay transfers the E2E messages based on the identity information of peer UE in the Adaptation Layer. The initiator (UE1) knows the Adaptation layer info identifying the peer UE (UE3) after a discovery procedure. UE3 responds with E2E unicast Direct Communication Accept message in the same way.

NOTE 1: For the Layer 2 UE-to-UE Relay case, whether step5b is performed before step 6b or triggered during step 6b will be decided at normative phase.

NOTE 2: How Relay-1 can transfer the messages based on the identity information of UE-1/UE-2 in the Adaptation Layer requires cooperation with RAN2 during the normative phase.

6.8.3 Impacts on services, entities and interfaces

UE impacts to support new Relay related functions.

There is no release message in an SL RRC message. That is, although sidelink release may be achieved using a PC5-S release message in a higher layer, there is no operation to release a sidelink in an access stratum (AS) layer. A UE that transmits and receives a PC5-S release message from a higher layer may command a release operation to the AS layer to release related SL information (e.g., bearer).

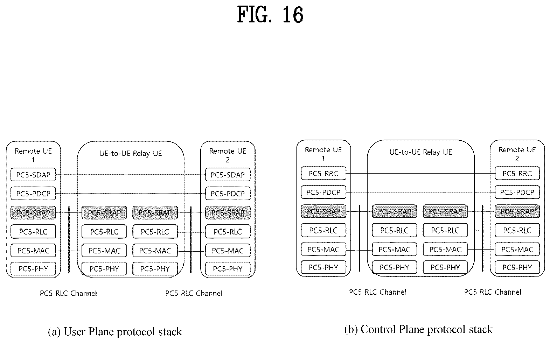

However, in the UE-to-UE relay operation, after connection establishment occurs between a remote UE 1 and a remote UE 2 through a relay UE, a higher layer of the relay UE is not involved in the relay operation, as seen from a protocol stack related to the UE-to-UE Relay UE illustrated in FIG. 16. Therefore, when the remote UE 1 or the remote UE 2 transmits/receives the PC5-S release message, the AS layers of the remote UE 1 and the remote UE 2 may release information related to connection according to instructions of the higher layer, but it is not obvious whether the AS layer of the relay UE is capable of releasing PC5-S connection (with UE1 and UE2, respectively). For example, in the UE-to-UE relay operation, the PC5-S release message transmitted and received for releasing of the end-to-end SL configuration between a source remote UE and a target remote UE may not be recognized by the relay UE, which may cause a problem in that the relay UE needs to continue to maintain the PC5 link with each UE.

Therefore, a method for releasing of a relay UE when the remote UE 1 and/or the remote UE 2 releases relay-related transmit/receive operations will be described below.

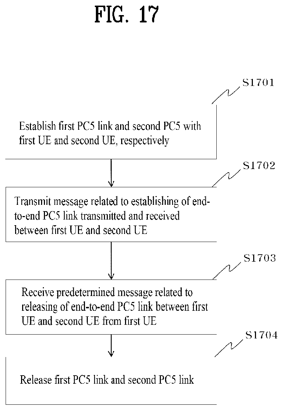

According to an embodiment, a relay UE may establish a first PC5 link and a second PC5 link with a first UE and a second UE, respectively (S1701 of FIG. 17) and transmit a message related to establishment of an end-to-end PC5 link transmitted and received between the first UE and the second UE (S1702).

The relay UE may receive a predetermined message related to releasing of the end-to-end PC5 link between the first UE and the second UE from the first UE (S1703) and release the first PC5 link and the second PC5 link (S1704).

Here, the predetermined message may include a value recognizable at an access stratum (AS) layer of the relay UE. Releasing of the first PC5 link and the second PC5 link may be performed after the releasing of the end-to-end PC5 link. The releasing of the first PC5 link and the second PC5 link may be performed based on a higher layer of the relay UE decoding the predetermined message received from the AS layer. The predetermined message may be transmitted based on the first UE transmitting a message indicating the releasing of the end-to-end PC5 link, and the releasing of the first PC5 link and the second PC5 link may include releasing of a bearer, bearer mapping information, and measurement setting for the UE-to-UE relay.

That is, for a PC5-S message (e.g., a PC5-S release message) that the higher layer of the relay UE needs to receive (and/or decode), the AS layer of the UE 1/UE 2 indicates and transmits the PC5-S message with a value recognizable by the AS layer of the relay UE.

In detail, the higher layer of the UE 1/UE 2 may indicate to the AS layer to transmit a specific PC5-S message. For example, when transmitting a PC5-S release message from the remote UE 1 (or UE 2) to the remote UE 2 (or UE 1) through the relay UE, the AS layer of the UE 1 (or UE 2) may make an indication and the AS layer of the relay UE that recognizes the indication may also raise the received message to a higher layer thereof. The higher layer of the relay UE may decode the message and, when the corresponding message is a PC5-S release message, the higher layer of the relay UE may release the values set for a relay operation. (A relay-related operation command is performed) That is, this is a method of separately indicating a message that the higher layer of the relying UE needs to receive during the UE-to-UE relay operation.

As such, when performing link release between the source remote UE and the target remote UE in the UE-to-UE relay operation, the source remote UE may first perform release for the end-to-end SL configuration and then perform release for the SL configuration for each hop. When 1:N bearer mapping is applied and release is performed for end-to-end SL configuration, an SL RRC operation may be performed to release only the relevant configuration at each hop. Here, as described above, the higher layer of the relay UE may not recognize the message for link release between UEs, and thus according to an embodiment of the present disclosure, by transmitting a release message related to the AS layer, the higher layer of the relay UE may recognize the release message (through the AS layer), and the relay may release the PC5 link and the second PC5 link. By doing so, in the UE-to-UE relay operation, the PC5-S release message transmitted and received for releasing of the end-to-end SL configuration between a source remote UE and a target remote UE may not be recognized by the relay UE, and accordingly, a problem in that the relay UE needs to continue to maintain the PC5 link with each UE may be resolved.

Discovery/discovery solicitation/DCR/DCA (PC5-S) messages for the UE-to-UE relay UE operation may include whether the UE-to-UE relay is supported. The corresponding message may indicate whether an L2 UE-to-UE relay is supported, an L3 UE-to-UE relay is supported, or both. In relation to the above description, a procedure for link release may be applied in the method described in SL connection and release described below.

As another example, the AS layer of the remote UE that receives an instruction from a higher layer to release relay operation related information (e.g., release of relay-related bearer/LCH information) may transmit a release indication to the relay UE when the corresponding release information is related to relay communication. Alternatively, the release indications may be configured to be transmitted from the higher layer to the relay UE. The relay UE that receives this may release information used for the relay operation (e.g., bearer and bearer mapping information, and measurement settings for UE-to-UE relay). The release indication described above may also be provided in information decoding possible at a sidelink relay adaptation protocol (SRAP) layer for the UE-to-UE relay (e.g., SRAP layer header). Information for the release of the relay UEs may also be transferred a MAC CE. (In that case, the relay UE may also receive messages with the same content from the remote UE 1 and UE 2).

As another example, the higher layer of the remote UE 1, which receives a PC5-S release message, may transmit a message (or indication) to the relay UE to release the configuration for relaying operation between the remote UE 1 and the remote UE 2. The relay UE that receives the message may release the UE-to-UE relay settings associated with the remote UE that transmits the message. The release indication may be a value included in the SRAP layer (SRAP header) and may be a value processed by the relay UE without being forwarded to a counterpart remote UE. (Only the remote UE that receives the PC5-S release message transmits a release indication to the relay UE)

In the above description, a relay UE device may include at least one processor, and at least one computer memory operably connected to the at least one processor and storing instructions that, when executed, cause the at least one processor to perform operations, and in this the operations may include establishing a first PC5 link and a second PC5 link with the first UE and the second UE, respectively, transmitting a message related to establishing an end-to-end PC5 link transmitted and received between the first UE and the second UE receiving a predetermined message related to releasing of the end-to-end PC5 link between the first UE and the second UE from the first UE, and releasing the first PC5 link and the second PC5 link by the relay UE, and the predetermined message may include a value recognizable in an access stratum (AS) layer of the relay UE.

An operating method of the first UE may include establishing a first PC5 link with the relay UE by the first UE, transmitting a message related to establishing the end-to-end PC5 link to the second UE through the relay UE, by the first UE, and transmitting a predetermined message related to releasing of the end-to-end PC5 link between the first UE and the second UE to the relay UE, by the first UE, wherein the predetermined message includes a value recognizable in an access stratum (AS) layer of the relay UE, and the first PC5 link may be released by the relay UE receiving the predetermined message.

The first UE device may include at least one processor, and at least one computer memory operably connected to the at least one processor and storing instructions that, when executed, cause the at least one processor to perform operations, and in this case, the operations include establishing a first PC5 link with the relay UE by the first UE, transmitting a message to the second UE through the relay UE related to establishing an end-to-end PC5 link by the first UE, and transmitting a predetermined message related to releasing an end-to-end PC5 link between the first UE and the second UE by the first UE to the relay UE, and the predetermined message may include a value recognizable by an access stratum (AS) layer of the relay UE, and the first PC5 link may be released by the relay UE receiving the predetermined message.

Hereinafter, connection release triggering in relation to the UE-to-UE relay operation will be described. In the present disclosure, releasing related settings includes releasing settings between the source remote UE and the relay UE, the relay UE and the target remote UE, as well as between the source remote UE and the target remote UE.

Assuming that the source remote UE, the relay UE, and the target remote UE perform the UE-to-UE relay operation, when the SL-RSRP (or SD-RSRP) between the source remote UE and the relay UE is equal to or less than a predefined threshold (or may be a threshold used for relay selection), the source remote UE may notify the higher layer of this and release the relevant settings. The value measured in this case may be a value measured by the source remote UE, but may also be a value measured by the relay UE. That is, when the result of measuring the SL-RSRP (or SD-RSRP) between the source remote UE and the relay UE by the relay UE is equal to or less than a predefined threshold, the relay UE may notify the source remote UE (or source relay UE) of this.

The relay UE may also notify the source remote UE when the SL-RSRP (or SD-RSRP) between the relay UE and the target remote UE is equal to or less than a predefined threshold (or may be the threshold used during relay selection). This value may be a value measured by the relay UE, but may also be a value measured by the target remote UE and reported to the relay UE. Alternatively, when the SL-RSRP (or SD-RSRP) measured by the target remote UE is equal to or less than a predefined threshold, the relay UE may notify the relay UE and notify the source remote UE of the measurement value received from the remote UE (and/or) a simple notification (notification that the signal strength between the relay UE and the target remote UE is equal to or less than the threshold).

The source remote UE (or source relay UE) may trigger transmission/reception of a discovery message or trigger relay reselection when the release situation described above occurs.

When the relay UE performs a handover (HO) and a new cell does not support a U2U relay operation, or when the relay UE in IDLE/INACTIVE state moves and camps on a cell that does not support the U2U relay operation, the relay UE may release the SL connection with each remote UE (source remote UE and target remote UE) (or) other relay UE in case of multi-hop, or transmit a notification message about this. The (source/target) remote UE receiving the notification message may trigger relay re-selection.

On the other hand, when the (source/target) remote UE performs HO and the new cell does not support the U2U relay operation, or when the relay UE in IDLE/INACTIVE state moves and camps on a cell that does not support the U2U relay operation, the (source/target) remote UE may release the SL connection with the relay UE (and/or) peer remote UE, or transmit the notification message to notify that the remote UE moves to a cell that does not support the U2U relay (i.e., the source/target remote UE transmits a notification message to the relay UE or the peer remote UE). The relay UE and peer remote UE that receive this may release the SL connection for U2U communication. Alternatively, the peer remote UE may trigger relay re-selection. The notification message used in this case may be transmitted as a PC5-RRC/PC5-S message.

When the 1-hop SL connection between the SRC remote UE and the relay UE is completed and the 1-hop SL connection between the relay UE and the DST remote UE is completed, the SL connection may be established between the SRC remote UE and the DST remote UE through the indirect link. In this case, when a timer (e.g., T400 (T400-like) timer) related to the SL connection between the SRC remote UE and the DST remote UE expires, the SRC (or DST) remote UE may need to notify the relay UE of this. The relay UE may also use the corresponding information to trigger release of the 1-hop SL connection between the relay UE and the SRC (or DST) remote UE.

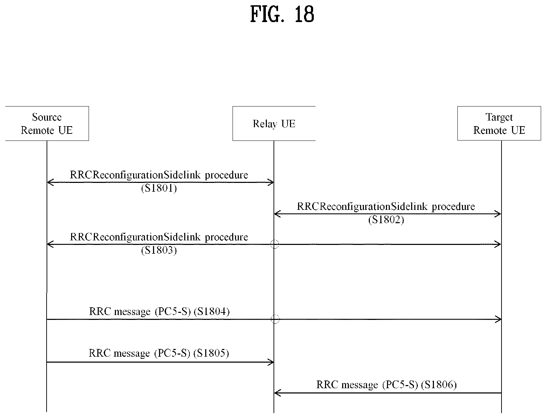

FIG. 18 illustrates an SL connection and release procedure between a source remote UE and a target remote UE. Referring to FIG. 18, the source remote UE establishes an SL connection with the relay UE (S1801), and the relay UE establishes an SL connection with the target remote UE (S1802). The source remote UE and the target remote UE may perform an operation for end-to-end SL connection (S1803). When the SL connection is established as described above, a release procedure may be performed in the higher layer. For example, a release-related message is transmitted from the higher layer of the source remote UE to the target remote UE via the relay UE (S1804) (SL release between the source remote UE and the target remote UE). The source remote UE transmits a message to release the link between the source remote UE and the relay UE (S1805). The target remote UE that receives a release message from the source remote UE may transmit a message to release the SL between the target remote UE and the relay UE (S1806). An operation of transmitting the release message described above may be replaced by the procedure for SL release.

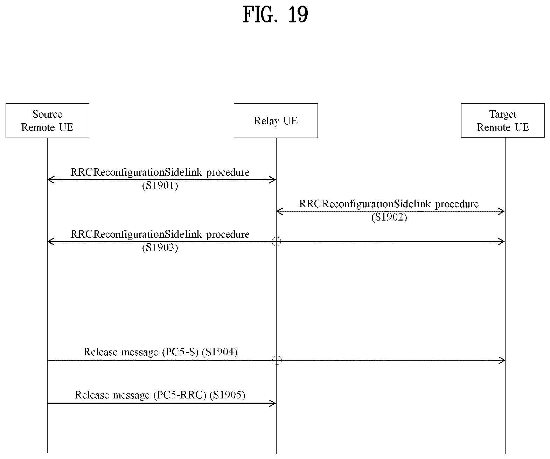

As another example, as illustrated in FIG. 19, the source remote UE may transmit a message to release the SL between the source remote UE and the target remote UE (S1904) and indicate the release to the relay UE with a separate PC5-RRC message (S1905). By doing so, when end-to-end release is performed in a higher layer between the source remote UE and the target remote UE, the AS layer may perform link release between the source remote UE and the relay UE, and between the relay UE and the target remote UE. This is to release the settings related to the source remote UE and target remote UE to the relay UE, as there is no higher layer in the relay

UE.

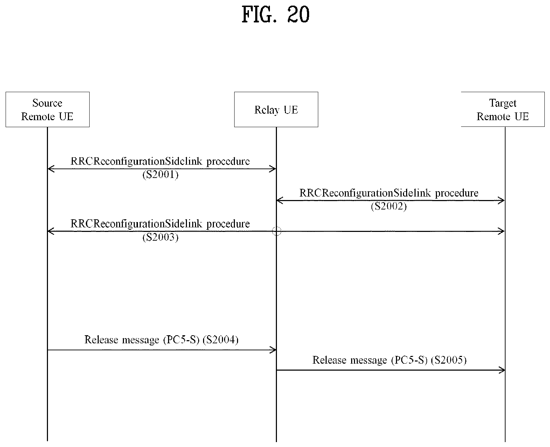

As another example, as illustrated in FIG. 20, when the source remote UE transmits an SL release message to the relay UE (S2004), the relay UE and the source remote UE also release the SL settings for the source remote UE and the target remote UE. The release message between the source remote UE and the relay UE may trigger message transmission (S2005) to release the SL connection between the relay UE and the target remote UE.

When end-to-end PC5-S release (link release) occurs between the source remote UE and the target remote UE, whether the SL connection of each hop (1st-hop, 2nd-hop) is to be released may be determined by UE implementation. The relay UE may multiplex links (or bearers) connected to a plurality of remote UEs in the 1st hop into a single link (or bearer) in the 2nd hop using 1:N bearer mapping, or the like. In this case, even if the end-to-end link (or bearer) between a specific source remote UE and a target remote UE is released, the link (1st-hop, 2nd-hop) of each hop may need to be maintained, which may depend on selection of each remote UE/relay UE (UE implementation). However, even in this case, when the end-to-end link (or end-to-end bearer) between the source remote UE and the target remote UE is released, an operation to release the related configuration may be required. For example, the source remote UE and the target remote UE may need to transmit an RRCReconfigurationSidelink message to the relay UE such that the local ID information and SL bearer information (such as ID/mapping rule) related to the released end-to-end link, and QoS split related information (if QoS related information is exchanged) may be removed. That is, when the end-to-end link (or end-to-end bearer) is released, the source remote UE and the target remote UE need to perform the RRCReconfigurationSidelink procedure to remove the related (1st-hop and 2nd-hop) configuration (only) from the relay UE.

The problem may also be resolved by performing the RRCReconfigurationSidelink procedure for the relay UE only in either the source remote UE or the target remote UE. In this case, any one of the UEs described above may be determined as the UE that initiates the end-to-end link (or end-to-end bearer) release.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

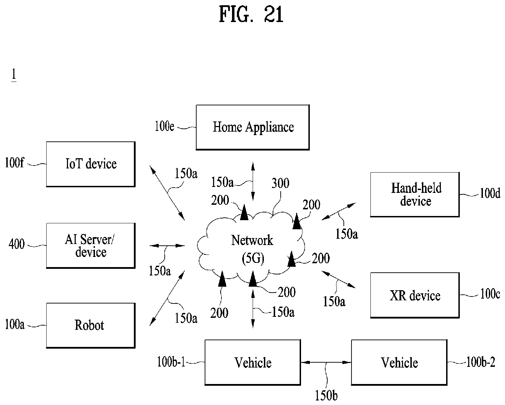

FIG. 21 illustrates a communication system 1 applied to the present disclosure.

Referring to FIG. 21, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

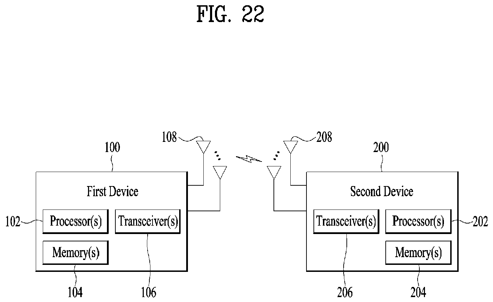

FIG. 22 illustrates wireless devices applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

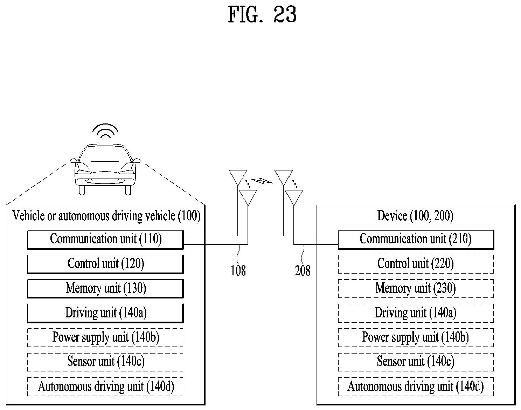

FIG. 23 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 23, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

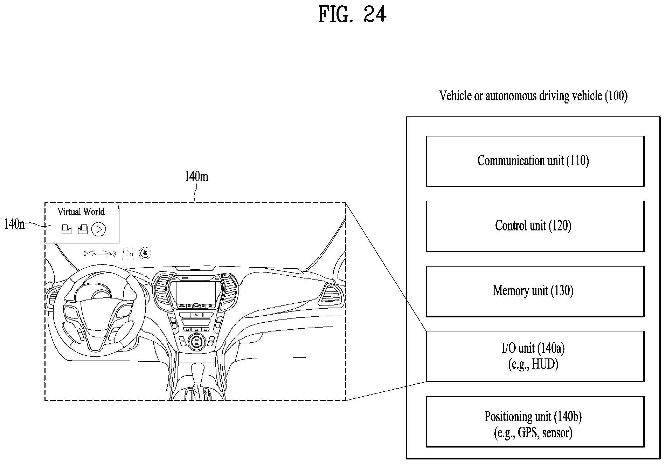

FIG. 24 illustrates a vehicle applied to the present disclosure. The vehicle may be implemented as a transport means, an aerial vehicle, a ship, etc.
Referring to FIG. 24, a vehicle 100 may include a communication unit 110, a control unit 120, a memory unit 130, an I/O unit 140a, and a positioning unit 140b.
The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.
As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

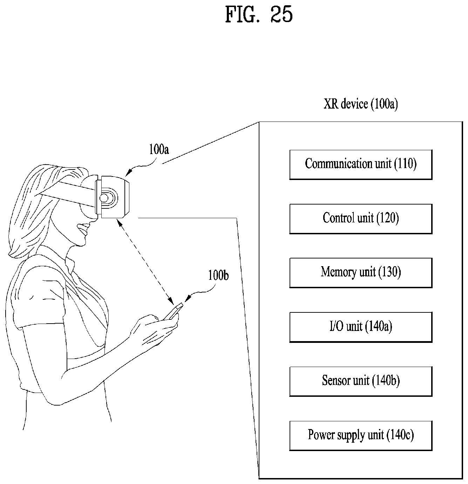

FIG. 25 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.
Referring to FIG. 25, an XR device 100a may include a communication unit 110, a control unit 120, a memory unit 130, an I/O unit 140a, a sensor unit 140b, and a power supply unit 140c.
The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

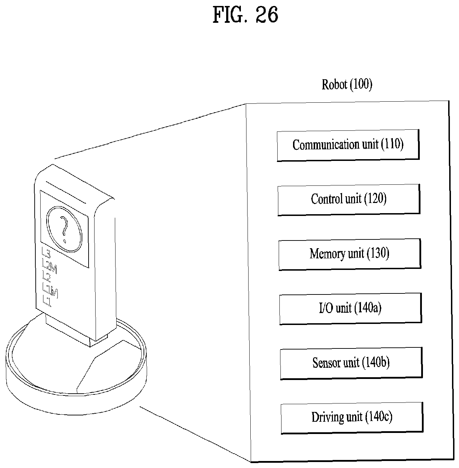

FIG. 26 illustrates a robot applied to the present disclosure. The robot may be categorized into an industrial robot, a medical robot, a household robot, a military robot, etc., according to a used purpose or field.

Referring to FIG. 26, a robot 100 may include a communication unit 110, a control unit 120, a memory unit 130, an I/O unit 140a, a sensor unit 140b, and a driving unit 140c.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

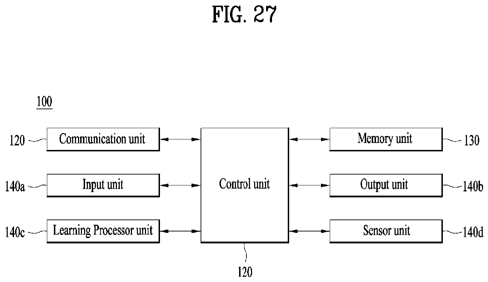

FIG. 27 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 27, an AI device 100 may include a communication unit 110, a control unit 120, a memory unit 130, an I/O unit 140a/140b, a learning processor unit 140c, and a sensor unit 140d.

The communication unit 110 may transmit and receive wired/radio signals (e.g., sensor information, user input, learning models, or control signals) to and from external devices such as other AI devices (e.g., 100x, 200, or 400 of FIG. 21) or an AI server (e.g., 400 of FIG. 21) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 21). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 21). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

## INDUSTRIAL AVAILABILITY

The above-described embodiments of the present disclosure are applicable to various mobile communication systems.

## Claims

1. An operating method of a relay user equipment (UE) related to a UE-to-UE relay in a wireless communication system, the operating method comprising:

    establishing, by the relay UE, a first PCS link and a second PCS with a first UE and a second UE, respectively;
    transmitting, by the relay UE, a message related to establishing of an end-to-end PCS link transmitted and received between the first UE and the second UE;
    receiving, by the relay UE, a predetermined message related to releasing of the end-to-end PC5 link between the first UE and the second UE from the first UE; and
    releasing, by the relay UE, the first PCS link and the second PC5 link,
    wherein the predetermined message includes a value recognizable at an access stratum (AS) layer of the relay UE.

2. The operating method of claim 1, wherein the releasing of the first PC5 link and the second PC5 link is performed after the releasing of the end-to-end PC5 link.

3. The operating method of claim 1, wherein the releasing of the first PC5 link and the second PCS link is performed based on a higher layer of the relay UE decoding the predetermined message received from the AS layer.

4. The operating method of claim 1, wherein the predetermined message is transmitted based on the first UE transmitting a message indicating the releasing of the end-to-end PCS link.

5. The operating method of claim 1, wherein the releasing of the first PC5 link and the second PC5 link includes releasing of a bearer, bearer mapping information, and measurement setting for the UE-to-UE relay.

6. A relay user equipment (UE) device in a wireless communication system, the relay UE device comprising:

    at least one processor; and
    at least one computer memory operably connected to the at least one processor and storing instructions that, when executed, cause the at least one processor to perform operations,
    wherein the operations include:
    establishing, by the relay UE, a first PCS link and a second PCS with a first UE and a second UE, respectively;

transmitting, by the relay UE, a message related to establishing of an end-to-end PCS link transmitted and received between the first UE and the second UE;

receiving, by the relay UE, a predetermined message related to releasing of the end-to-end PC5 link between the first UE and the second UE from the first UE; and

releasing, by the relay UE, the first PCS link and the second PC5 link, wherein the predetermined message includes a value recognizable at an access stratum (AS) layer of the relay UE.

7. An operating method of a first user equipment (UE) related to a UE-to-UE relay in a wireless communication system, the operating method comprising:

establishing, by the first UE, a first PCS with the relay UE;

transmitting, by the first UE, a message related to establishing of an end-to-end PC5 link through the relay UE to the second UE;

transmitting, by the first UE, a predetermined message related to releasing of the end-to-end PC5 link between the first UE and the second UE from the first UE,

wherein the predetermined message includes a value recognizable at an access stratum (AS) layer of the relay UE, and the first PCS link is released by a relay UE receiving the predetermined message.

8. The operating method of claim 7, wherein the first PC5 link is released after the releasing of the end-to-end PCS link.

9. The operating method of claim 7, wherein the predetermined message is transmitted based on the first UE transmitting a message indicating the releasing of the end-to-end PCS link.

10. The operating method of claim 7, wherein the releasing of the first PC5 link and the second PC5 link includes releasing of a bearer, bearer mapping information, and measurement setting for the UE-to-UE relay.

FIG. 1

Evolution to 5G,
while maintaining backward compatibility

Advanced use cases
5G V2X R16

Enhanced safety
C-V2X R14/15

Higher throughput      Wideband raging
Higher reliability      and positioning
Lower latency

Basic safety
802.11p or C-V2X R14

Enhanced range and reliability

| Vehicle Platooning | Extended Sensors |
| Remote Driving | Advanced Driving |

# FIG. 2

# FIG. 3

**(a)**

UE

| PDCP |
| RLC |
| MAC |
| PHY |

eNB

| PDCP |
| RLC |
| MAC |
| PHY |

**(b)**

UE

| NAS |
| RRC |
| PDCP |
| RLC |
| MAC |
| PHY |

eNB

| RRC |
| PDCP |
| RLC |
| MAC |
| PHY |

MME

| NAS |

# FIG. 4

# FIG. 5

gNB

- Inter-Cell RRM
- RB Control
- Connection Mobility Control
- Radio Access Control
- Measurement Configuration and Provisioning
- Dynamic Resource Allocation (Scheduler)

NG-RAN

AMF

- NAS Security
- Idle-State Mobility Processing

SMF

- UE IP Address Allocation
- PDU Session Control

UPF

- Mobility Anchoring
- PDU Processing

5GC          Internet

FIG. 6

| | One Frame (10ms) | |
| --- | --- | --- |
| ... | | ... |

| | Half-Frame (5ms) | Half-Frame (5ms) | |
| --- | --- | --- | --- |
| ... | | | ... |

| | Subframe 0 (1ms) | ... | Subframe 4 (1ms) | Subframe 5 (1ms) | ... | Subframe 9 (1ms) | ... |

Subframe (1ms)

| | |
| --- | --- |
| 15KHz | Slot 0 (14symbols) |

1ms

| | | |
| --- | --- | --- |
| 30KHz | Slot 0 (14symbols) | Slot 1 |

500us

| | | | | |
| --- | --- | --- | --- | --- |
| 60KHz | Slot 0 (14symbols) | Slot 1 | Slot 2 | Slot 3 |

250us

| | | | | | | | | |
| --- | --- | --- | --- | --- | --- | --- | --- | --- |
| 120KHz | Slot 0 (14symbols) | Slot 1 | Slot 2 | Slot 3 | Slot 4 | Slot 5 | Slot 6 | Slot 7 |

125us

# FIG. 7

# FIG. 8

UE A       UE B

| PDCP | ←→ | PDCP |
| RLC | ←→ | RLC |
| MAC | ←→ | MAC |
| PHY | ←→ | PHY |

PU5-U

(a)

UE A       UE B

| RRc | ←→ | RRC |
| RLC | ←→ | RLC |
| MAC | ←→ | MAC |
| PHY | ←→ | PHY |

PU5-C

(b)

# FIG. 9

PU5-U

(a)

PU5-U

(b)

FIG. 10

# FIG. 11

(a)                    (b)

FIG. 12

| Remote UE | Relay UE | gNB |

S1200 — Discovery

S1201 — PC5 Connection Establishment

S1202 — RRC Setup Request

S1203 — RRC Setup

S1204 — Prepare PC5 and Uu RLC channel for SRB1

S1205 — RRC Setup Complete

S1206 — Security Mode Command

S1207 — Security Mode Complete

S1208 — RRC Reconfiguration

S1209 — RR Reconfiguration Complete

S1210 — Prepare PC5 and Uu RLC channel for SRB2/DRB

FIG. 13

# FIG. 14

| UE-1 | Relay-1 | Relay-2 | UE-2 |
|---|---|---|---|
| 0. Service authorization and parameter provisioning | 0. Service authorization and parameter provisioning | 0. Service authorization and parameter provisioning | 0. Service authorization and parameter provisioning |

1. Direct Communication Request (relay_indication enabled)

2. Decide to participate in the procedure

2. Decide to participate in the procedure

3. Direct Communication Request

3. Direct Communication Request

4. Decide which path to choose

Security Establishment

4. Direct Communication Accept

Security Establishment

4. Direct Communication Accept

Security Establishment

4. Direct Communication Accept

5. Decide which path to use

6a. IP allocation and retrieval for L3 UE-to-UE Relay case

6b. End-to-end PC5 link establishment for L2 UE-to-UE Relay case

# FIG. 15

FIG. 16

(a) User Plane protocol stack

(b) Control Plane protocol stack

## FIG. 17

S1701

Establish first PC5 link and second PC5 with first UE and second UE, respectively

S1702

Transmit message related to establishing of end-to-end PC5 link transmitted and received between first UE and second UE

S1703

Receive predetermined message related to releasing of end-to-end PC5 link between first UE and second UE from first UE

S1704

Release first PC5 link and second PC5 link

# FIG. 18

| Source Remote UE | Relay UE | Target Remote UE |

RRCReconfigurationSidelink procedure (S1801)

RRCReconfigurationSidelink procedure (S1802)

RRCReconfigurationSidelink procedure (S1803)

RRC message (PC5-S) (S1804)

RRC message (PC5-S) (S1805)

RRC message (PC5-S) (S1806)

# FIG. 19

# FIG. 20

| Source Remote UE | Relay UE | Target Remote UE |

RRCReconfigurationSidelink procedure
(S2001)

RRCReconfigurationSidelink procedure
(S2002)

RRCReconfigurationSidelink procedure
(S2003)

Release message (PC5-S) (S2004)

Release message (PC5-S) (S2005)

FIG. 21

<u>1</u>

100f — IoT device

100e — Home Appliance

150a

150a — 300

200

400 — AI Server/ device

Network (5G)

150a

200

Hand-held device — 100d

150a

200

150a

XR device — 100c

100a — Robot

150a — 200

200 — 150a

100b-1 — Vehicle — Vehicle — 100b-2

150b

FIG. 22

FIG. 23

| Vehicle or autonomous driving vehicle (100) | Device (100, 200) |
|---|---|
| Communication unit (110) | Communication unit (210) |
| Control unit (120) | Control unit (220) |
| Memory unit (130) | Memory unit (230) |
| Driving unit (140a) | Driving unit (140a) |
| Power supply unit (140b) | Power supply unit (140b) |
| Sensor unit (140c) | Sensor unit (140c) |
| Autonomous driving unit (140d) | Autonomous driving unit (140d) |

108    208

FIG. 24

Vehicle or autonomous driving vehicle (100)

140m

Virtual World

140n

Communication unit (110)

Control unit (120)

Memory unit (130)

I/O unit (140a)
(e.g., HUD)

Positioning unit (140b)
(e.g., GPS, sensor)

FIG. 25

XR device (100a)

100a

100b

| Communication unit (110) |
| Control unit (120) |
| Memory unit (130) |
| I/O unit (140a) |
| Sensor unit (140b) |
| Power supply unit (140c) |

FIG. 26

Robot (100)

Communication unit (110)

Control unit (120)

Memory unit (130)

I/O unit (140a)

Sensor unit (140b)

Driving unit (140c)

FIG. 27

## INTERNATIONAL SEARCH REPORT

| International application No. |
|---|
| **PCT/KR2023/008428** |

### A. CLASSIFICATION OF SUBJECT MATTER

**H04W 76/30**(2018.01)i; **H04W 76/14**(2018.01)i; **H04W 88/04**(2009.01)i; **H04W 92/18**(2009.01)i; **H04W 76/34**(2018.01)i; **H04W 8/00**(2009.01)i; **H04W 24/08**(2009.01)i

According to International Patent Classification (IPC) or to both national classification and IPC

### B. FIELDS SEARCHED

Minimum documentation searched (classification system followed by classification symbols)

H04W 76/30(2018.01); H04B 7/155(2006.01); H04L 12/24(2006.01); H04L 29/12(2006.01); H04W 76/15(2018.01); H04W 76/19(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UE-to-UE Relay, PC5 link, establish, release message, Access Stratum (AS) layer indication, end-to-end PC5 link

### C. DOCUMENTS CONSIDERED TO BE RELEVANT

| Category* | Citation of document, with indication, where appropriate, of the relevant passages | Relevant to claim No. |
|---|---|---|
| A | US 2021-0409263 A1 (ASUSTEK COMPUTER INC.) 30 December 2021 (2021-12-30)<br>See paragraphs [0327]-[0333]; and figures 18-20. | 1-10 |
| A | WO 2021-147979 A1 (MEDIATEK SINGAPORE PTE. LTD.) 29 July 2021 (2021-07-29)<br>See paragraphs [0042]-[0045]; and figure 7. | 1-10 |
| A | US 2018-0152234 A1 (ZTE CORPORATION) 31 May 2018 (2018-05-31)<br>See paragraphs [0691]-[0711]; and figure 13. | 1-10 |
| A | WO 2022-061818 A1 (LENOVO (BEIJING) LIMITED) 31 March 2022 (2022-03-31)<br>See paragraphs [0079]-[0116]; and figures 6-8. | 1-10 |
| A | LG ELECTRONICS. Revised WID on NR sidelink relay enhancements. 3GPP TSG RAN Meeting #96, RP-221262. 08 June 2022.<br>See sections 3-4.1. | 1-10 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 October 2023** | **04 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/008428**

| Patent document cited in search report | | | Publication date (day/month/year) | Patent family member(s) | | | Publication date (day/month/year) |
|---|---|---|---|---|---|---|---|
| US | 2021-0409263 | A1 | 30 December 2021 | CN | 113938980 | A | 14 January 2022 |
| | | | | KR | 10-2022-0001453 | A | 05 January 2022 |
| | | | | KR | 10-2517319 | B1 | 03 April 2023 |
| WO | 2021-147979 | A1 | 29 July 2021 | CN | 115024020 | A | 06 September 2022 |
| | | | | US | 2022-0361267 | A1 | 10 November 2022 |
| | | | | WO | 2021-146999 | A1 | 29 July 2021 |
| US | 2018-0152234 | A1 | 31 May 2018 | CN | 106211188 | A | 07 December 2016 |
| | | | | EP | 3297326 | A1 | 21 March 2018 |
| | | | | US | 10581512 | B2 | 03 March 2020 |
| | | | | WO | 2016-184370 | A1 | 24 November 2016 |
| WO | 2022-061818 | A1 | 31 March 2022 | CN | 116368936 | A | 30 June 2023 |
| | | | | EP | 4218357 | A1 | 02 August 2023 |

Form PCT/ISA/210 (patent family annex) (July 2022)